(19) Europäisches Patentamt
European Patent Office
Office européen des brevets

(11) **EP 1 003 264 A2**

(12) **EUROPÄISCHE PATENTANMELDUNG**

(43) Veröffentlichungstag:
24.05.2000 Patentblatt 2000/21

(51) Int. Cl.[7]: **H02J 3/36**

(21) Anmeldenummer: **99122261.3**

(22) Anmeldetag: **08.11.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.11.1998 DE 19853464**

(71) Anmelder:
**SIEMENS AKTIENGESELLSCHAFT**
**80333 München (DE)**

(72) Erfinder:
• **Karlecik-Maier, Franz, Dipl.-Ing.**
**91315 Höchstadt (DE)**
• **Rittiger, Jürgen, Dr.**
**91074 Herzogenaurach (DE)**

(54) **Windenergieanlage**

(57)    Die Erfindung bezieht sich auf eine Windenergieanlage (W) mit einer Gleichstrom-Anbindung (8) an ein Drehstromnetz (11), wobei erfindungsgemäß der Gleichstrom-Anbindung (8) eine Drehstrom-Anbindung (9) parallelgeschaltet ist. Eine Einrichtung (17) zur Leistungsflussregelung koordiniert die Leistungsübertragung an das Drehstromnetz (11) derart, dass die Gleichstrom-Anbindung (8) einen stochastischen Lastfluss und die Drehstrom-Anbindung (9) im synchronen Normalbetrieb eine Grundlast übernimmt. Die Gleichstrom-Anbindung (9) ist dabei vorzugsweise in HGÜ-Technik ausgeführt und bildet dabei ein Element zur Lastflussregelung. Ein Windenergiepark mit N derartiger Windenergieanlagen (W_N) ist vorzugsweise nach Art einer Multiterminal-HGÜ ausgeführt.

FIG 1

EP 1 003 264 A2

**Beschreibung**

Die Erfindung bezieht sich auf eine Windenergieanlage mit einem von einem Rotor angetriebenen Generator, der über eine Gleichstrom-Übertragungseinrichtung an ein Drehstromnetz geschaltet ist. Sie bezieht sich weiter auf einen Windenergiepark mit einer Anzahl derartiger Windenergieanlagen.

Beim Betrieb einer Windenergie- oder Windkraftanlage wird die im Wind enthaltene Primärenergie in elektrische Energie umgewandelt. Die Energieumwandlung erfolgt dabei mittels eines Generators, der über einen Rotor oder Propeller entsprechend der über die Zeit schwankenden Windgeschwindigkeit stochastisch angetrieben wird. Aufgrund dieses Verhaltens sind an die Einspeisung der aus einem stochastischen Primärenergieträger erzeugten elektrischen Energie in ein regionales Versorgungsnetz, z.B. in ein 110kV-Drehstromnetz, hohe Anforderungen hinsichtlich der Netzverträglichkeit gestellt. Diese Anforderungen beziehen sich auf die von der Windkraftanlage gelieferte Energiequalität, die durch maximal zulässige Werte insbesondere bezüglich der Spannungs- und Leistungsänderungen an der Einspeisestelle in das regionale Versorgungsnetz, durch Spannungs- und Leistungsschwankungen (Netz-Flicker) und der im netzseitigen Einspeisestrom eventuell vorhandenen Oberschwingungen festgelegt ist.

Aus der DE 196 20 906 A1 ist ein auf dem sogenannten Gleichstrom-Konzept basierender Windenergiepark bekannt, der die genannten Anforderungen in besonders einfacher und zuverlässiger Art und Weise erfüllt. Bei diesem Konzept erfolgt der Energietransfer in das regionale Versorgungsnetz über eine Gleichstrom-Übertragungseinrichtung. Dabei speist jede Windenergieanlage am Erzeugungsort dessen Leistung in einen gemeinsamen Gleichstromkreis ein, der die Gesamtleistung an eine geeignete Einspeisestelle in das Versorgungsnetz überträgt. Dort wird die Energie mittels eines gemeinsamen Wechselrichters in das Drehstrom-Versorgungsnetz eingespeist. Der Vorteil dieses Konzepts besteht darin, dass die GleichstromÜbertragung den Windenergiepark elektrisch bis zum Wechselrichter einer netzseitigen Stromrichterstation bringt. Dadurch kann diese näher oder direkt am Umspannwerk des regionalen Versorgungsnetzes und damit am Anschlussort mit der höheren oder höchsten Netzkurzschlussleistung installiert werden. Da die Anforderungen an die Energiequalität von der am Windenergiepark-Anschlussort vorhandenen Netzkurzschlussleistung abhängen, können diese entsprechend einfach und zuverlässig erfüllt werden. Die Stromrichter der Gleichstrom-Übertragungseinrichtung sind jedoch für die gesamte Generator-Leistung auszulegen.

Der Erfindung liegt daher die Aufgabe zugrunde, eine Windenergieanlage anzugeben, die den Betrieb eines stochastisch angetriebenen Generators an einem Drehstromnetz bei gleichzeitig einfacher und zuverlässiger Leistungsübertragung ermöglicht.

Diese Aufgabe wird erfindungsgemäß gelöst durch die Merkmale des Anspruchs 1. Dazu ist eine Drehstrom-Übertragungseinrichtung vorgesehen, die über einen von einer Synchronisiereinrichtung gesteuerten Schalter der Gleichstrom-Übertragungseinrichtung parallel geschaltet ist. Eine Einrichtung zur Leistungsflussregelung steuert und koordiniert, insbesondere in Abhängigkeit von der Drehzahl des Generators, die Leistungsübertragung an das Drehstromnetz.

Durch die Parallelschaltung der Drehstrom-Übertragungseinrichtung und der Gleichstrom-Übertragungseinrichtung ist eine kombinierte Gleichstrom- und Drehstrom-Anbindung an das Drehstromnetz gegeben, deren Netzanbindungen über die Einrichtung zur Leistungsflussregelung koordiniert geregelt werden. Dabei erfolgt eine Aufteilung der zu übertragenden Leistung in eine Drehstrom-Grundlast und in einen stochastischen Lastfluss über den Gleichstromkreis.

In vorteilhafter Ausgestaltung erfolgt die Drehstrom-Anbindung an das Drehstromnetz über eine Impedanz und über den von der Synchronisiereinrichtung gesteuerten Schalter, der zweckmäßigerweise als Lasttrennschalter ausgeführt ist. Die Impedanz ist durch eine Drossel realisiert, die beispielsweise mit einem nachgeschalteten Widerstand innerhalb einer den Generator mit dem Drehstromnetz verbindenden Drehstromleitung mit dem Lasttrennschalter in Reihe liegt.

Eine besonders vorteilhafte Lastflussregelung ermöglicht eine Gleichstrom-Übertragungseinrichtung in HGÜ-Technik (Hochspannungs-Gleichstrom-Übertragung), wie diese beispielsweise in dem Aufsatz „HGÜ: Technik, die Grenzen überwindet", abgedruckt in der Zeitschrift „ELEKTRIE", Berlin 45 (1991) 3, Seiten 94 bis 96, beschrieben ist. Dadurch, dass im Normalbetrieb bei bezüglich der Netzfrequenz synchron arbeitendem Generator die als Element zur Lastflussregelung dienende HGÜ-Einrichtung vorteilhafterweise nur einen vergleichsweise geringen Leistungsanteil überträgt, können deren Stromrichter für eine entsprechend reduzierte Leistung ausgelegt und somit der Gleichstromkreis entsprechend einfach aufgebaut werden.

Alternativ kann auch eine UPFC-Einrichtung (Unified Power Flow Controller) als Element zur Lastflussregelung eingesetzt werden, wie diese beispielsweise in dem Aufsatz „The Unified Power Flow Controller: A New Approach To Power Transmission Control", abgedruckt in der Zeitschrift „IEEE Transaction on Power Delivery", Vol. 10, No. 2, April 1995, Seiten 1085 bis 1093, beschrieben ist.

Das Element zur Lastflussregelung bildet zusammen mit der Leistungsflussregelung eine Leistungsfluss-Einrichtung, die die Aufteilung der zu übertragenden Leistung in eine Drehstrom-Grundlast und in einen stochastischen Lastfluss besonders zuverlässig ermöglicht. Die Leistungsfluss-Einrichtung stellt dabei den Leistungsfluss vom Generator über die Drehstrom-Anbindung und über die Gleichstrom-Anbindung an das Drehstromnetz derart ein, dass das sich bei der Energieumwandlung ergebende elektrische Moment in Wechselwirkung mit dem stochastischen Moment sowohl den asynchronen Hochlauf des stochastisch angetriebenen Synchrongenerators als auch den synchronen Normalbetrieb ermöglicht.

Während des Hochlaufs des Synchrongenerators erfolgt der Leistungsfluss lediglich über die Gleichstrom-Übertragungseinrichtung und damit über das Element zur Lastflussregelung. Dazu weist die Leistungsflussregelung zweckmäßigerweise einen Drehzahlregler mit vorgeschaltetem Sollwertgeber für einen Hochlauf-Drehzahlsollwert auf. Dieser ist aus der momentanen Drehzahl des Generators über eine Kennlinie derart bestimmt, dass auch bei einem stochastischen mechanischen Moment infolge schwankender Windgeschwindigkeit eine Beschleunigung des aus dem Rotor und aus einem eventuell eingesetzten Getriebe sowie aus dem Generator aufgebauten Aggregates erfolgt, bis die vom Drehstromnetz vorgegebene Synchrondrehzahl erreicht ist. Der Drehzahlregler generiert dann anhand eines Vergleichswertes eines (ersten) Vergleichers aus diesem Hochlauf-Drehzahlsollwert und aus einem Drehzahl-Istwert einen Leistungssollwert.

Die Aufteilung der vom Generator an das Drehstrom-Versorgungsnetz über die Drehstrom-Anbindung einerseits und über die Gleichstrom-Anbindung andererseits zu übertragende Leistung erfolgt anhand vorgebbarer Koeffizienten, mit denen der vom Drehzahlregler generierte Leistungssollwert gewichtet wird. Dazu sind dem Drehzahlregler ein erster Multiplizierer und ein zweiter Multiplizierer nachgeschaltet, denen eingangsseitig einerseits der Leistungssollwert und andererseits jeweils einer der beiden Koeffizienten zugeführt ist. Die Multiplizierer generieren entsprechend der Aufteilung gewichtete Sollwerte für die Gleichstrom- bzw. für die Drehstrom-Übertragungseinrichtung.

Zur Erzeugung der Koeffizienten dient zweckmäßigerweise ein Rampenglied, das mit einem der beiden Multiplizierer direkt und mit dem anderen Multiplizierer über einen (zweiten) Vergleicher verbunden ist. Dieser enthält beispielsweise den Wert „1" und generiert somit gemäß der Beziehung $K_1 + K_2 = 1$ beispielsweise den Koeffizienten $K_1 = 1 - K_2$. Dieser Koeffizient $K_1$ repräsentiert dann den von der Gleichstrom-Übertragungseinrichtung zu übernehmenden Leistungsanteil, dessen zugehöriger Sollwert von dem entsprechenden Multiplizierer generiert wird.

Während des asynchronen oder stochastischen Hochlaufs des Generators ist der den Leistungsanteil der Drehstrom-Anbindung repräsentierende Koeffizient über das Rampenglied auf Null gesetzt, so dass lediglich der Sollwert für die Gleichstrom-Anbindung, d.h. für das Element zur Lastflussregelung generiert wird. Ist die Synchrondrehzahl des Generators erreicht, so übergibt das Rampenglied den dort festgelegten Koeffizienten an den (zweiten) Vergleicher. Die Aktivierung des Rampenglieds erfolgt über eine Rückmeldung des Lasttrennschalters der Drehstrom-Übertragungseinrichtung.

Der Sollwert für den Leistungsanteil der Drehstrom-Anbindung wird zweckmäßigerweise nicht zu deren direkter, sondern zu deren indirekter Steuerung bearbeitet, indem der Leistungsanteil der Gleichstrom-Anbindung entsprechend herauf- oder herunter geregelt wird. Dazu ist zweckmäßigerweise ein (dritter) Vergleicher vorgesehen, der aus dem zweiten Sollwert für die Drehstrom-Anbindung und aus einem Istwert der über die Drehstrom-Übertragungseinrichtung geführten Leistung einen Differenzwert für einen (vierten) Vergleicher generiert, dem der erste Sollwert für die Gleichstrom-Anbindung zugeführt ist.

Der zweite Sollwert für die Drehstrom-Anbindung ist dabei zweckmäßigerweise dem (dritten) Vergleicher über ein Glättungsglied zugeführt, dessen Zeitkonstante den im zweiten Multiplizierer generierten Sollwert aufbaut und dabei dem mit dem zweiten Koeffizienten gewichteten Leistungssollwert des Drehzahlreglers angenähert. Der Vergleichswert des (dritten) Vergleichers ist dem (vierten) Vergleicher zugeführt, der den Sollwert für die Gleichstrom-Anbindung entsprechend einstellt.

Aufgrund dieser Regelung übernimmt das Element zur Lastflussregelung und somit die Gleichstrom-Anbindung die schnellen stochastischen Leistungsänderungen, die über die Leistungsflussregelung in den Sollwert für die Gleichstrom-Anbindung einfließen. Durch die Übernahme schneller stochastischer Leistungsänderungen vom Element zur Lastflussregelung werden Leistungs-Flicker reduziert, indem die stochastischen Leistungsänderungen durch die im Element zur Lastflussregelung, d.h. in der HGÜ-Übertragungseinrichtung vorhandenen Speicher in Form von Kondensatoren und Drosseln geglättet werden.

Eine bevorzugte Ausführungsform eines Windenergieparks mit einer Anzahl derartiger Windenergieanlagen ist Gegenstand des Anspruchs 11. Die Netzanbindung erfolgt dabei vorteilhafterweise mittels einer sogenannten Multiterminal-HGÜ, mit der die Leistung der einzelnen Windenergieanlagen am Erzeugungsort in einen gemeinsamen Gleichstromkreis eingespeist und mit Gleichstrom bis zur nächsten geeigneten Einspeisestelle in das Drehstrom-Versorgungsnetz übertragen wird.

Ähnlich wie die Netzanbindung über die Gleichstrom-Übertragungseinrichtung mit GTO-Stromrichtern bietet die Netzanbindung mit der Multiterminal-HGÜ besondere Vorteile hinsichtlich der Netzverträglichkeit. Die in das Drehstromnetz eingespeiste Wirkleistung ist auch hier im Vergleich zur Netzanbindung mit einem Asynchrongenerator wesentlich konstanter. Bedingt durch die räumliche Ausdehnung des Windernergieparks ist die Augenblicksleistung der einzelnen Windenergieanlagen nicht gleich, so dass ein Ausgleich entsteht, wenn die Energie einer Vielzahl von Windenergieanlagen zentral gesammelt wird. Am Wechsichter der HGÜ-Einrichtung kann außerdem die Blindleistung am Einspeiseort und damit die Spannungshaltung günstig beeinflußt werden. Ein innovatives Regelungskonzept für eine Multiterminal-HGÜ ist in der DE 195 44 777 C2 beschrieben.

Nachfolgend werden Ausführungsbeispiele der Erfindung anhand einer Zeichnung näher erläutert. Darin zeigen:

FIG 1  in einem Blockschaltbild eine Windenergieanlage mit einer Leistungsflusseinrichtung zur Regelung der Leistungsübertragung von einem Generator an ein Drehstromnetz über eine Gleichstrom-Anbindung und eine Drehstrom-Anbindung,

FIG 2  in einem Blockschaltbild eine einzelne Windenergieanlage gemäß FIG 1 mit einer in HGÜ-Technik ausgeführten Lastflussregelung, und

FIG 3  einen Windenergiepark mit einer Anzahl derartiger Windenergieanlagen.

Entsprechende Teile sind in allen Figuren mit den gleichen Bezugszeichen versehen.

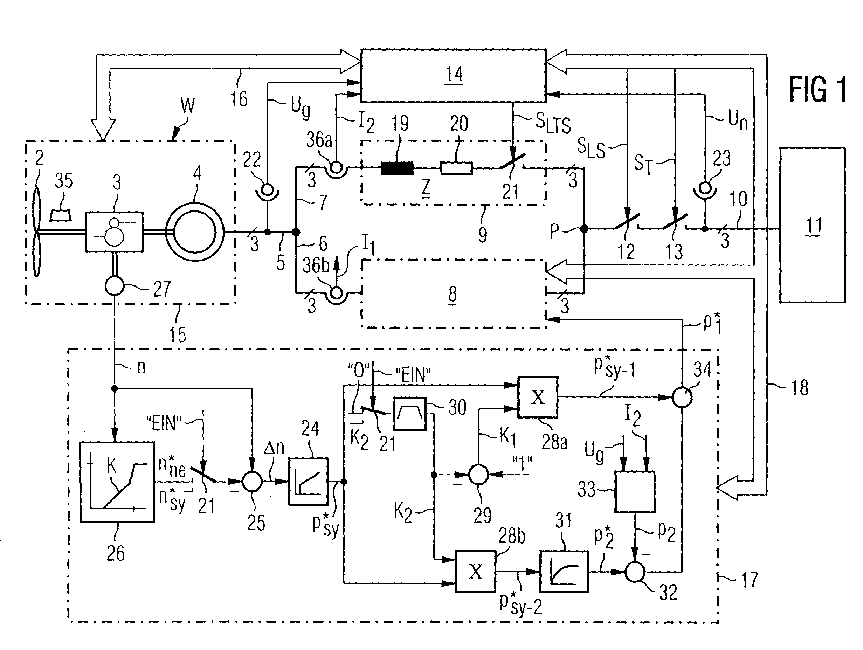

FIG 1 zeigt eine Windenergieanlage W mit einem Rotor 2 und mit einem mit diesem über ein Getriebe 3 gekoppelten Synchrongenerator 4. Eine dreiphasige mit dem Synchrongenerator 4 verknüpfte Drehstromleitung 5 verzweigt sich mittels Abzweigleitungen 6,7 über eine Gleichstrom-Übertragungseinrichtung 8 bzw. eine Drehstrom-Übertragungseinrichtung 9. Die Gleichstrom-Übertragungseinrichtung 8, die nachfolgend auch als Gleichstrom- oder GS-Anbindung bezeichnet wird, und die nachfolgend analog als Drehstrom- oder DS-Anbindung bezeichnete Drehstrom-Übertragungseinrichtung 9 sind über eine gemeinsame Drehstromleitung 10 an ein Drehstromnetz 11 geführt.

In der Drehstromleitung 10 liegen hintereinander ein Leistungsschalter 12 und ein Trennschalter 13, deren Schaltbefehle $S_{LS}$ bzw. $S_T$ von einer Einrichtung 14 zur Steuerung und Synchronisierung sowie zum Schutz der Windkraftanlage W und der Übertragungseinrichtungen 8,9 generiert werden.

Der Messdaten- und Steuerbefehltranster zwischen der Einrichtung 14 und dem aus dem Rotor 2, dem Getriebe 3 und dem Synchrongenerator 4 aufgebauten Aggregat 15 der Windkraftanlage W ist durch den Pfeil 16 symbolisiert. Analog ist durch den Pfeil 18 der Daten- und Steuerbefehltransfer zwischen der Einrichtung 14 und der GS-Anbindung 8 einerseits sowie einer Einrichtung 17 zur Leistungsflussregelung andererseits symbolisiert. Die Einrichtung 17 regelt den Leistungsfluss vom Synchrongenerator 4 zum Drehstromnetz 11 hin derart, dass das sich beim Betrieb der Windenergieanlage W ergebende elektrische Moment in Wechselwirkung mit dem stochastischen Moment des asynchronen Hochlaufs des Synchrongenerators 4 und der synchrone Normalbetrieb zuverlässig gewährleistet ist. Die GS-Anbindung 8 dient dabei als Element zur Lastflussregelung, das zusammen mit der Leistungsflussregelung eine Leistungsflusseinrichtung darstellt.

Die DS-Anbindung 9 ist der GS-Anbindung 8 elektrisch parallelgeschaltet. Die DS-Anbindung vom Synchrongenerator 4 an das Drehstromnetz 11 erfolgt über eine von einer Drossel 19 mit nachgeschaltetem Widerstand 20 gebildete Leistungsübergabe-Impedanz Z und über einen Lasttrennschalter 21, der zusammen mit der in der Abzweigleitung 7 liegenden Impedanz Z die Drehstrom-Übertragungseinrichtung 9 darstellt.

Der Lasttrennschalter 21 erhält von der Einrichtung 14 zur Steuerung der Windenergieanlage W und zur Synchronisierung des Synchrongenerators 4 mit dem Drehstromnetz 11 einen Einschalt- oder Steuerbefehl $S_{LTS}$. Dazu überwacht die Einrichtung 14 die mittels eines Meßwandlers 22 an der Drehstromleitung 5 erfasste Generatorspannung $U_g$ und die mittels eines Meßwandlers 23 in der Drehstromleitung 10 erfasste Netzspannung $U_n$ bezüglich des Betrags und der Lage der entsprechenden Spannungsvektoren zueinander.

Die Einrichtung 17 zur Lastflussregelung umfasst einen Drehzahlregler 24, dem über einen ersten Vergleicher 25 ein Sollwertgeber 26 für einen Hochlauf-Drehzahlsollwert $n^*_{hl}$ vorgeschaltet ist. Diesem ist ein von einem im Ausführungsbeispiel am Getriebe 3 angeordneten Drehzahlgeber 27 erfasster momentaner Drehzahl-Istwert n zugeführt. Der Drehzahl-Istwert n wird außerdem an den ersten Vergleicher 25 direkt geführt. Der Drehzahlregler 24 ist ausgangsseitig mit einem ersten Multiplizierer 28a und mit einem zweiten Multiplizierer 28b verbunden. Der erste Multiplizierer 28a ist eingangsseitig außerdem mit einem zweiten Vergleicher 29 verbunden, während der zweite Multiplizierer 28b eingangsseitig mit einem an den zweiten Vergleicher 29 geführten Rampengeber 30 verbunden ist. Der zweite Multiplizierer 28b ist ausgangsseitig über ein Glättungsglied 31 an einen dritten Vergleicher 32 geführt, der außerdem mit einem Leistungskalkulationsglied 33 verbunden ist. Der dritte Vergleicher 32 ist mit einem vierten Vergleicher 34 verbunden, an den außerdem der erste Multiplizierer 28a ausgangsseitig geführt ist.

Während des Hochlaufs des Synchrongenerators 4 erfolgt der Leistungsfluss lediglich über die GS-Anbindung 8 und damit über das Element zur Lastflussregelung. Dabei sind der Leistungsschalter 12 und der Trennschalter 13 geschlossen, während der Lasttrennschalter 21 geöffnet und somit die Drehstrom-Anbindung 9 vom Drehstromnetz 11 getrennt ist. Unter der Voraussetzung, dass ein Bremssystem 35 des Aggregats 15 gelöst und der Rotor oder Propeller 2 vom Wind in eine Dreh- oder Rotationsbewegung versetzt worden ist, erhält der Drehzahlregler 24 der Einrichtung 17 zur koordinierenden Leistungsflussregelung den Hochlauf-Drehzahlsollwert $n^*_{hl}$. Dieser wird aus der momentan am Drehzahlregler 27 gemessenen Drehzahl n über eine Kennlinie K des Sollwertgebers 26 derart bestimmt, dass auch bei stochastischem mechanischen Moment eine Beschleunigung des Aggregats 15 erfolgt, bis die Synchrondrehzahl $n^*_{sy}$ erreicht ist. Der Drehzahlregler 24 generiert dann anhand eines aus der Differenz zwischen dem Hochlauf-Drehzahlsollwert $n^*_{hl}$ und dem Drehzahl-Istwert n gebildeten Vergleichswert $\Delta n$ einen Leistungssollwert $p^*_{sy}$, der sowohl an den ersten Multiplizierer 28a als auch an den zweiten Multiplizierer 28b zugeführt ist. Die Aufteilung des Leistungssollwertes $p^*_{sy}$ in einen Sollwert $p^*_{sy\_1}$ für die GS-Anbindung 8 - und damit für das Element zur Lastflussregelung - sowie in einen zweiten Sollwert $p^*_{sy\_2}$ für die DS-Anbindung 9 wird durch einen ersten Koeffizienten $K_1$ und durch einen zweiten Koeffizienten $K_2$ bestimmt. Dies erfolgt, indem der Leistungssollwert $p^*_{sy}$ mittels der beiden Multiplizierer 28a,28b mit den Koeffizienten $K_1$ bzw. $K_2$ entsprechend gewichtet wird. Die Koeffizienten $K_1$ und $K_2$ werden mittels des Rampengliedes 30 und des Vergleichers 29 gemäß der Beziehung $K_1 + K_2 = 1$ generiert, dem dazu der Wert „1" zugeführt ist.

Während des asynchronen Hochlaufs des Aggregats 15 und damit des Synchrongenerators 4 übernimmt die als Element zur Lastflussregelung arbeitende GS-Anbindung 8 die Leistungsübertragung solange, bis von der Einrichtung 14 die Rückmeldung „EIN" des Lasttrennschalters 21 erfolgt. Bis zu diesem Zeitpunkt sind $K_2 = 0$ und $K_1 = 1$, so dass der Sollwert $p^*_{sy\_2} = 0$ und somit der Sollwert $p^*_{sy\_1} = p^*_{sy}$ ist. Da bis zur „EIN"-Rückmeldung des Lasttrennschalters 21 der Sollwert $p^*_{sy\_2}$ auch am Ausgang des Glättungsgliedes 31 und damit am dritten Vergleicher 32 den Wert „0" liefert, entspricht der über den vierten Vergleicher 34 geführte Sollwert dem Leistungssollwert, da $p^*_1 = p^*_{sy\_1} = p^*_{sy}$ ist. Dabei ist der vom dritten Vergleicher 32 gelieferte Vergleichswert $\Delta p_2 = 0$, da auch der von dem Leistungskalkulationsglied 33 generierte Leistungs-Istwert $p_2 = 0$ ist. Der Leistungs-Istwert $p_2$ wird aus der Generatorspannung $U_g$ und aus dem über die DS-Anbindung 9 fließenden Strom $I_2$ gebildet und ist daher bei geöffnetem Lasttrennschalter 21 gleich Null. Dieser Strom $I_2$ sowie der über die Gleichstrom-Anbindung 8 fließende Strom $I_1$ werden mittels eines Meßwandlers 36a bzw. 36b erfasst und ebenfalls der Einrichtung 14 zugeführt.

Entspricht die momentane Drehzahl n der Synchrondrehzahl $n^*_{sy}$ ($n = n^*_{sy}$) und stimmen die von der Einrichtung 14 überwachten Phasenlagen der Generatorspannung $U_g$ und der Netzspannung $U_n$ überein, so erzeugt die Einrichtung 14 das Steuersignal $S_{LTS}$ und gibt damit den Einschaltbefehl an den Lasttrennschalter 21 zum Anschließen des Synchrongenerators 4 auch über seine DS-Anbindung 9 an das Drehstromnetz 11. Mit dem Einschaltbefehl erhält der Drehzahlregler 24 über die „EIN"-Rückmeldung die Synchrondrehzahl $n^*_{sy}$ als Sollwert und der Normalbetrieb beginnt. Dabei wird die gewünschte Leistungsaufteilung entsprechend den Koeffizienten $K_1$ und $K_2$ gemäß der Beziehung $p^*_{sy\_1} = p^*_{sy} \cdot K_1$ bzw. $p^*_{sy\_2} = p^*_{sy} \cdot K_2$ wirksam.

Der Leistungsanteil der DS-Anbindung 9 wird mit der Zeitkonstante des Glättungsgliedes 31 aus dem Sollwert $p^*_{sy\_2}$ aufgebaut und nähert sich dem Wert $p^*_2 = p^*_{sy\_2} = p^*_{sy} \cdot K_2$. Da der Leistungssollwert $p^*_1$ der GS-Anbindung 8 gemäß der Beziehung $p^*_1 = p^*_{sy\_1} - (p^*_2 - p_2)$ bestimmt ist, übernimmt diese als Element zur Lastflussregelung alle schnellen stochastischen Leistungsänderungen. Diese schnellen Änderungen werden vom Drehzahlregler 24 über den Sollwert $p^*_{sy\_1}$ und vom System über den kalkulierten Leistungs-Istwert $p_2$ durch die Einrichtung 17 zur Leistungsflussregelung berücksichtigt, wobei die Änderungen des Sollwertes $p^*_2$ geglättet und somit langsam sind.

Mittels des Elements zur Lastflussregelung sowie der Leistungsregelung und damit mittels der Leistungsflusseinrichtung 8,17 wird erreicht, dass die Grundlast von der DS-Anbindung 9 übernommen wird, während die stochastische Leistung vom Element zur Lastflussregelung und damit von der GS-Anbindung übernommen wird.

Die Generator-Netz-Leistungsübergabe über die DS-Anbindung 9 an das Drehstromnetz 11 wird vereinfacht (ohne Verluste) von der folgenden Gleichung bestimmt:

$$p^*_2 = 3 \cdot (U_g \cdot U_n / X) \cdot \sin(\theta),$$

wobei $U_g$ die Klemmspannung des Synchrongenerators 4, $U_n$ die Netzspannung am Leistungs-Übergabeknoten P, X die Reaktanz der Leistungsübergabe-Impedanz Z und $\theta$ der Übertragungswinkel zwischen $U_g$ und $U_n$ ist.

Da die Netze der elektrischen Energieversorgung nahezu mit konstanter Spannung als sogenannte Konstantspannungsnetze betrieben werden, wird die Leistungsveränderung über den Übertragungswinkel $\theta$ vorgenommen. Das Element zur Lastflussregelung entnimmt daher dem Synchrongenerator 4 an dessen (nicht dargestellten) Klemmen die Leistung entsprechend dem Sollwert $p^*_1$ und übergibt diese dem Drehstromnetz 11 am Übergabeknoten P.

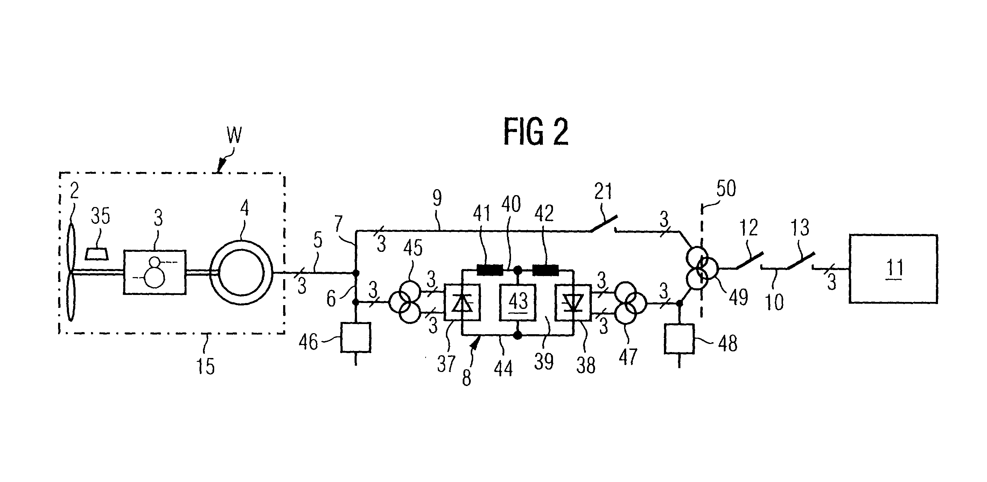

Als Element zur Lastflussregelung ist vorteilhafterweise eine HGÜ-Einrichtung 8 vorgesehen, wie diese in FIG 2 bei einer freistehenden Windenergieanlage W dargestellt ist. Der Aufbau der Windenergieanlage W mit dem Aggregat 15 und der Parallelschaltung aus der GS-Anbindung in Form der HGÜ-Einrichtung 8 und der DS-Anbindung 9 entspricht dem Ausführungsbeispiel gemäß FIG 1, wobei die Einrichtungen 14 und 17 sowie die Impedanz Z und die Meßwandler 22,23,36a,36b hier nicht dargestellt sind.

Die HGÜ-Einrichtung 8 ist aus einem Gleichrichter 37 und einem Wechselrichter 38 mit dazwischenliegendem Gleichstromkreis 39 aufgebaut, in dessen im Ausführungsbeispiel positiven Ausgangsleitung 40 zwei Glättungsdrosseln 41,42 angeordnet sind. Zwischen diesen ist ein Gleichstromfilter 43 an die positive Ausgangsleitung 40 sowie an eine negative Ausgangsleitung 44 des Gleichstromkreises 39 geschaltet. Der Gleichrichter 37 ist eingangsseitig über eine Eingangstransformator 45 an die Abzweigleitung 6 und damit über diese und die Drehstromleitung 5 mit dem Synchrongenerator 4 elektrisch leitend verbunden. An die Abzweigleitung 6 ist außerdem ein Wechselstromfilter 46 angeschlossen. Der Wechselrichter 38 ist ausgangsseitig über einen Ausgangstransformator 47, an den wiederum ein Wechselstromfilter 48 angeschlossen ist, an einen den Übertragungseinrichtungen 8 und 9 gemeinsamen Anpasstransformator 50 geführt. Diese ist ausgangsseitig über die Drehstromleitung 10 mit den in dieser liegenden Schaltern 12 und 13 an das Drehstromnetz 11 geführt. Die dargestellte strichlinierte Trennlinie 50 symbolisiert den Übergang vom generatorseitigen Niederspannungsbereich in einen netzseitigen Hoch- oder Mittelspannungsbereich.

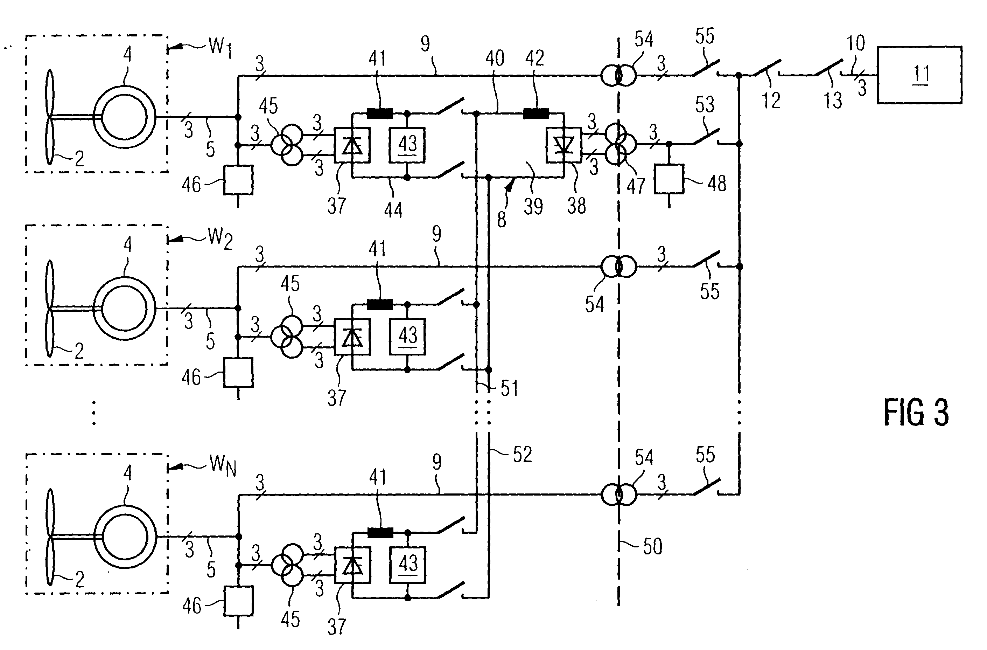

FIG 3 zeigt einen Windenergiepark mit N Windenergieanlagen $W_1$ bis $W_N$, die innerhalb der GS-Anbindung 8 nach Art einer Multiterminal-HGÜ miteinander verschaltet sind. Der Aufbau der Übertragungseinrichtungen 8 und 9 der jeweiligen Windenergieanlage $W_N$ entspricht im wesentlichen dem Aufbau der Windenergieanlage W gemäß FIG 2. Unterschiedlich ist lediglich die Verknüpfung der DS-Anbindungen 9 und der GS-Anbindungen 8 über die jeweilige HGÜ-Einrichtung der einzelnen Windenergieanlagen $W_N$. Dazu sind die HGÜ-Einrichtungen 8 der einzelnen Windenergieanlagen $W_N$ gleichstromseitig über Sammelschienen 51,52 parallelgeschaltet, die mit der positiven Ausgangsleitung 40 bzw. mit der negativen Ausgangsleitung 44 des Gleichstromkreises 39 verbunden sind.

Ein allen Gleichrichtern 37 gemeinsamer Wechselrichter 38 ist an einen Anpasstransformator 47 geführt, an den ausgangsseitig ein wiederum ein einzelner Wechselstromfilter 48 angeschlossen ist. Der Anpasstransformator 47 ist netzseitig über einen zusätzlichen Lasttrennschalter 53 an die an das Drehstromnetz 11 geführte Drehstromleitung 10 angeschlossen. Der Anschluss der DS-Anbindungen 9 der einzelnen Windenergieanlagen $W_1$ bis $W_N$ erfolgt über jeweils einen separaten Anpasstransformator 54, von denen jeder ausgangsseitig über einen separaten Lasttrennschalter 55 an die Drehstromleitung 10 angeschlossen ist.

Mittels der derart aufgebauten Multiterminal-HGÜ wird die Leistung der einzelnen Windenergieanlagen $W_1$ bis $W_N$ am Erzeugungsort in den diesen gemeinsamen Gleichstromkreis 39 eingespeist und somit mittels Gleichstrom bis zur nächsten geeigneten Einspeisestelle in das Drehstrom-Versorgungsnetz 11 übertragen. Dabei ist die Einspeisestelle durch den Aufstellungsort der Anpasstransformatoren 47 und 54 bestimmt.

**Patentansprüche**

1. Windenergieanlage mit einem von einem Rotor (2) angetriebenen Generator (4), der über eine Gleichstrom-Übertragungseinrichtung (8) an ein Drehstromnetz (11) geschaltet ist,
**gekennzeichnet durch** eine Drehstrom-Übertragungseinrichtung (9), die über einen von einer Synchronisiereinrichtung (14) gesteuerten Schalter (21) der Gleichstrom-Übertragungseinrichtung (8) parallelgeschaltet ist, wobei eine Einrichtung (17) zur Leistungsflussregelung die Leistungsübertragung an das Drehstromnetz (11) derart koordiniert, dass die Gleichstrom-Übertragungseinrichtung (8) einen stochastischen Lastfluss und die Drehstrom-Übertragungseinrichtung (9) im synchronen Normalbetrieb eine Grundlast übernimmt.

2. Windenergieanlage nach Anspruch 1,
**dadurch gekennzeichnet**, dass die Gleichstrom-Übertragungseinrichtung (8) in HGÜ-Technik ausgeführt ist.

3. Windenergieanlage nach Anspruch 1 oder 2,
**dadurch gekennzeichnet**, dass die Drehstrom-Übertragungseinrichtung (9) eine mit dem Schalter (21) innerhalb einer den Generator (4) mit dem Drehstromnetz (11) verknüpf enden Drehstromleitung (5,7) in Reihe liegende Impedanz (19,20) aufweist.

4. Windenergieanlage nach einem der Ansprüche 1 bis 3,
**dadurch gekennzeichnet**, dass die Einrichtung (17) zur Leistungsflussregelung einen Drehzahlregler (24) mit vorgeschaltetem Sollwertgeber (26) aufweist, wobei dem Drehzahlregler (24) von einem ersten Vergleicher (25) ein Vergleichswert ($\Delta n_1$) aus einem Drehzahl-Istwert (n) und aus einem Hochlauf-Drehzahlsollwert ($n^*_{hl}$) zugeführt ist, der vom Sollwertgeber (26) aus dem Drehzahl-Ist-wert (n) abgeleitet ist, und wobei der Drehzahlgeber (24) einen Leistungssollwert ($p^*_{sy}$) für die Gleichstrom-Übertragungseinrichtung (8) generiert.

5. Windenergieanlage nach Anspruch 4,
**dadurch gekennzeichnet**, dass dem Drehzahlregler (24) ein erster Multiplizierer (28a) und ein zweiter Multiplizierer (28b) nachgeschaltet sind, wobei der erste Multiplizierer (28a) den Leistungssollwert ($p^*_{sy}$) mit einem ersten Koeffizienten ($K_1$) multipliziert und einen ersten Sollwert ($p^*_{sy\_1}$) für den von der Gleichstrom-Übertragungseinrichtung (8) zu übertragenden Leistungsanteil generiert, und wobei der zweite Multiplizierer (28b) den Leistungssollwert ($p^*_{sy}$) mit einem zweiten Koeffizienten ($K_2$) multipliziert und einen zweiten Sollwert ($p^*_{sy-2}$) für den von der Drehstrom-Übertragungseinrichtung (9) zu übertragenden Leistungsanteil generiert.

6. Windenergieanlage nach Anspruch 5,
**dadurch gekennzeichnet**, dass der zweite Multiplizierer (28b) eingangsseitig mit einem Rampenglied (30) zur Generierung des zweiten Koeffizienten ($K_2$) verbunden ist.

7. Windenergieanlage nach Anspruch 5 oder 6,
**dadurch gekennzeichnet**, dass die Multiplizierer (28a,28b) eingangsseitig mit einem zweiten Vergleicher (29) zur Bildung der Koeffizienten gemäß der Beziehung: $K_1 + K_2 = 1$ verbunden sind, wobei $K_1$ der erste Koeffizient und $K_2$ der zweite Koeffizient ist.

8. Windenergieanlage nach einem der Ansprüche 5 bis 7,
**gekennzeichnet durch** einen dritten Vergleicher (32), der aus dem zweiten Sollwert ($p^*_{sy-2}$) und aus einem Istwert ($p_2$) der über die Drehstrom-Übertragungseinrichtung (8) geführten Leistung einen Differenzwert ($\Delta p_2$) für einen vierten Vergleicher (34) generiert, dem der erste Sollwert ($p^*_{sy-1}$) zugeführt ist, wobei der vierte Vergleicher (34) einen resultierenden Leistungssollwert ($p^*_1$) für die Gleichstrom-Übertragungseinrichtung (8) erzeugt.

9. Windenergieanlage nach einem der Ansprüche 5 bis 8,
**dadurch gekennzeichnet**, dass dem dritten Vergleicher (32) ein Glättungsglied (31) vorgeordnet ist.

10. Windenergieanlage nach einem der Ansprüche 1 bis 9,
**dadurch gekennzeichnet**, dass die Drehstrom-Übertragungseinrichtung (9) und die Gleichstrom-Übertragungseinrichtung (8) mit einem gemeinsamen Anpasstransformator (49) verbunden sind, der netzseitig über mindestens einen Trennschalter (12,13) an das Drehstromnetz (11) geführt ist.

11. Windenergiepark mit einer Anzahl von Windenergieanlagen ($W_N$) nach einem der Ansprüche 1 bis 9,
**dadurch gekennzeichnet**, dass die gleichstromseitig parallelgeschalteten Gleichstrom-Übertragungseinrichtungen (8) nach Art einer Multiterminal-HGÜ über einen gemeinsamen Wechselrichter (38) an einen Anpasstransformator (47) geführt sind, der über mindestens einen Trennschalter (53,12,13) an das Drehstromnetz (11) geführt ist, und dass die Drehstrom-Übertragungseinrichtungen (9) dem Anpasstransformator (47) über jeweils einen Anpasstransformator (54) netzseitig parallelgeschaltet sind.

FIG 1

EP 1 003 264 A2

FIG 2

FIG 3

EP 1 003 264 A2